# EUROPEAN PATENT SPECIFICATION

(11) **EP 2 878 202 B1**
(45) Date of publication and mention of the grant of the patent: **15.03.2017**
(21) Application number: 13823531.2
(22) Date of filing: 30.04.2013
(51) Int. Cl.: A21D 2/18, A21D 2/22, A21D 6/00

(54) **METHOD FOR PRODUCING DANISH DOUGH**
VERFAHREN ZUR HERSTELLUNG EINES TEIGS FÜR KOPENHAGENER GEBÄCK
PROCÉDÉ DE FABRICATION D'UNE PÂTE POUR PÂTISSERIES DANOISES

(30) Priority: 25.07.2012 JP 2012164524
(43) Date of publication of application: 03.06.2015
(73) Proprietor: Fuji Oil Company, Limited, Izumisano-shi Osaka 598-8540 (JP)
(72) Inventor: KANATANI, Hiroyuki, Tsukubamirai-shi Ibaraki 300-2436 (JP); ADACHI, Norifumi, Tsukubamirai-shi Ibaraki 300-2436 (JP); FUKUDA, Hirohisa, Tsukubamirai-shi Ibaraki 300-2436 (JP); IGA, Daihachi, Tsukubamirai-shi Ibaraki 300-2436 (JP)
(74) Representative: Hirsch & Associés
(86) International application number: PCT/JP2013/062563
(87) International publication number: WO 2014/017139

(56) References cited:
- EP-A1- 0 340 355
- EP-A1- 1 839 487
- EP-A1- 2 939 548
- EP-A2- 0 922 389
- JP-A- H 057 449
- JP-A- H0 276 531
- JP-A- H01 225 438
- JP-A- 2011 092 119
- US-A- 3 803 326
- YASUTAKA MIYOSHI: 'Daizu no Riyo ni Kansuru Kenkyu (the 1st report) -Rhizopus oligosporus 8631 Kabu no Mannanase ni Tsuite' BULLETIN OF HIROSHIMA BUNKYO WOMEN'S COLLEGE vol. 23, 1988, pages 37 - 46, XP008176247

## Description

### FIELD OF THE INVENTION

The present invention relates to a method for producing Danish dough, wherein the Danish dough after being baked has an increased volume and has a flaky and smooth texture.

### BACKGROUND OF THE INVENTION

Oxidants such as L-ascorbic acid, potassium bromate, potassium iodate, calcium peroxide and L-cystine and the like, added during a bread making process, convert mercapto groups (-SH) in gluten into disulfide bonds (S-S), thus are widely used for the purpose of improving the volume increase and the mechanical adaptability of the bread. Among the oxidants, in particular in view of safety, economical efficiency, convenience and the like, L-ascorbic acid is the most commonly used oxidant. L-ascorbic acid per se is a reducing agent, whereas it is oxidized by the ascorbic acid oxidase in wheat flour to form dehydro-L-ascorbic acid, which is further reduced by glutathione dehydrogenase to L-ascorbic acid, thereby acting on the mercapto groups in the gluten and converting them into disulfide bonds. Therefore, it has been considered as an oxidant in terms of bread making process.

With the addition of L-ascorbic acid, it is possible to achieve the aforementioned purpose of improvement to a certain extent. However, due to the action of the L-ascorbic acid, the dough is made a little excessively hard and become difficult to be mechanically cut; moreover, in particular for the Danish dough, it leads to problems in the bread making process, such as the decreased laminability, collapse or movement of dough when oil and fat products are incorporated. In addition, there are also problems like a hard texture and being prone to have a gummy texture for the bread added with L-ascorbic acid.

In order to solve these problems, the following methods have already been proposed: a method of adding gluten hydrolysate with a molecular weight of 1000 to 20000 while adding L-ascorbic acid (Patent Document 1), a method of adding soybean peroxidase (Patent Document 2) and the like.

On the other hand, the following technology has been disclosed: for soft pastries such as Danishes, in order to make a homogeneous layered structure which has an excellent extensibility of the dough and less shrinking of the dough after being extended, an emulsifier including various glycerine fatty acid esters is combined (Patent Document 3).

For a water-soluble soybean polysaccharide, the following contents have been disclosed: when being used for wheat flour products, it can inhibit the aging of starch, and show a soft texture and a good flavor (Patent Document 4). However, findings regarding the Danishes have not been published yet.

Patent Document 1: Japanese Unexamined Patent Publication No. H3-39028
Patent Document 2: Japanese Unexamined Patent Publication No. 10-4864
Patent Document 3: Japanese Unexamined Patent Publication No. 2003-92986
Patent Document 4: Japanese Unexamined Patent Publication No. 5-7449

### SUMMARY

For the gluten hydrolysate used in combination with ascorbic acid in Patent Document 1, only the gluten hydrolysate wherein its molecular weight is limited within the range of 1000 to 20000, the aforementioned effect may be achieved, and the effect of the volume increase is also low. In addition, for the soybean peroxidase used in combination with ascorbic acid in Patent Document 2, the extent of reaction varies with the amount of addition, pH and temperature, thus such an enzyme has a defect that great deviations may occur in respect to the quality of final product. Additionally, regarding the emulsifier in Patent Document 3, for the Danish dough, even if the texture such as crispness can be improved, it is not mentioned about the volume increase, furthermore, a large amount of an emulsifier which is about 10% of the fats is required to be added. The present invention addresses an effective production method whereby the

On the other hand, the following technology has been disclosed: for soft pastries such as Danishes, in order to make a homogeneous layered structure which has an excellent extensibility of the dough and less shrinking of the dough after being extended, an emulsifier including various glycerine fatty acid esters is combined (Patent Document 3).

For a water-soluble soybean polysaccharide, the following contents have been disclosed: when being used for wheat flour products, it can inhibit the aging of starch, and show a soft texture and a good flavor (Patent Document 4). However, findings regarding the Danishes have not been published yet.
Patent Document 1: Japanese Unexamined Patent Publication No. H3-39028
Patent Document 2: Japanese Unexamined Patent Publication No. 10-4864
Patent Document 3: Japanese Unexamined Patent Publication No. 2003-92986
Patent Document 4: Japanese Unexamined Patent Publication No. 5-7449
Document US3803326 discloses a process for making leavened bread and like bakery products comprising mixing conventional dough ingredients (flour, yeast...) with an additive composition comprising from 0.005 to 0.015% of ascorbic acid and from 0.12 to 0.40% of dried soya protein together with an amino acid and dried whey. Document EP0340355 discloses a process for making baked goods with high level of protein comprising forming a dough comprising at least 450 ppm by weight of ascorbic acid based on the total weight of dry ingredients and further containing from 6 to 10% of soybean flour or soya concentrate. None of these two documents discloses the use of water-soluble soybean polysaccharide.Document EP0922389 relates to a process for producing flour-containing foods for microwave oven heating which comprises adding water-soluble hemicellulose to raw dough used for flour-containing food.

Document EP1839487 discloses the use of a fermented soybean protein material as a bread-improving agent which has anti-fungal properties with having effects of improving physical properties and a taste of bread products. Document JP2011-092119 discloses a soy protein fermentation liquor used as a thickener in a process for making layered dough. However, none of these three documents discloses the use of water-soluble soybean polysaccharide in combination with ascorbic acid.

According to the present invention, it is possible to make more simply the baked products, preferably Danishes with increased volume after being frozen which has a flaky and smooth texture. In addition, the working efficiency is improved, since it is possible to readily produce dough with an excellent laminar layered structure resulting from the dough extensibility. Furthermore, the effect of inhibiting the deterioration of quality and damages caused by freezing during cryopreservation is also improved.

(Danishes) The Danishes in the present invention refer to Danish soft pastries. Being different from the method for producing breads such as toast bread, table roll and others, they are produced by folding roll-in oil and fat product in the dough of wheat flour which is made by using an oil and fat composition for kneading such as margarine and others. Specifically, bread flour, cake flour, granulated sugar, salt, yeasts, water and the like are mixed with an oil and fat composition for kneading to form a dough. The dough is kept in cold storage, after being spread with a roll-in oil and fat thereon followed by folding, it is then extended and folded repeatedly to form a multi-layer dough, which is optionally shaped thereafter, such a dough obtained is a Danish dough. The products obtained from the Danish dough by a subsequent proofing process and baking are Danishes. In addition, the Danish dough is frozen before or after proofing to obtain a frozen Danish dough, which can be stored and distributed for a long-term. Croissant is also a form of the Danishes.

(Water-soluble soybean polysaccharide) The water-soluble soybean polysaccharide that can be used in the present invention is a water-soluble polysaccharide extracted from soybeans, and there is no particular limitation to the method for producing the same. Generally, the by-product soybean curd residue, what is called okara, after soybean proteins being extracted, is used as a raw material, to which water is added, and extraction is performed under a weak acidic condition, which is considered as the isoelectric point of the soybean proteins, and under a high temperature above 100. The extracted water-soluble soybean polysaccharide may be used as a raw material directly in the form of extracted filtrate, or be used as a material further treated through a refining process with active carbon, desalination and the like. The addition amount of the water-soluble soybean polysaccharide is preferably between 0.05 and 5 weight % relative to wheat flour, and more preferably between 0.1 and 3 weight %. If the addition amount of the water-soluble soybean polysaccharide is less than 0.05 weight %, it will sometimes be difficult to achieve the target effect, and in addition, if it is more than 5 weight %, the dough will be excessively soft physicality, sometimes with a poor working performance.

(Ascorbic acid) The ascorbic acid used in the present invention refers to L-ascorbic acid, dehydroascorbic acid or salts thereof. The addition amount of the ascorbic acid used in the present invention is preferably 0.1 ppm and more relative to the wheat weight, and more preferably between 1 and 200 ppm. If it is less than 0.1 ppm, it will sometimes be difficult to achieve the desired effect. Even if the addition amount is more than 200 ppm, the effect will not change much, furthermore, the excessive effect of the ascorbic acid will cause the possibility of excessive elasticity of the bread dough, thereby deteriorating the appearance after being baked.

The water-soluble soybean polysaccharide and the ascorbic acid used in the present invention may be in various forms of, for example, powder, granule and liquid. Regarding a method of adding the water-soluble soybean polysaccharide and the ascorbic acid, they may be added upon powder-mixing with other raw materials. In addition, they may be added after the preparation of an aqueous solution. The important thing is that these are fully mixed with other materials, the methods of adding them is not limited. Furthermore, they may also be used in a form wherein they are dissolved in the aqueous phase of oleomargarine and others.

(Using in combination with other functional materials) The water-soluble soybean polysaccharide and the ascorbic acid used in the present invention may be used in combination with other baking quality improvers, such as a thickening polysaccharide, emulsifiers, enzymes, reducing agents and the like.

(Freezing) The effect of the present invention is manifested more significantly by freezing the above-mentioned Danish dough. That is, when freezing and circulating the dough, by setting it as the composition of the present invention, as compared to the previous combinations, the Danishes after being thawed and baked have a significantly improved effect of the volume and texture. In this aspect, for the frozen product, even if by repeatedly thawing/freezing, the effect of maintaining the volume is also high. In addition, in the present invention, an even more prominent effect can be manifested by freezing the produced dough after proofing.

(Effect) According to the present invention, for the Danishes, they can be conferred with a crumbly and crispy texture and the volume thereof can be increased significantly with a simple operation. In addition, the extensibility of the dough is improved, and it can be confirmed that in particular the deterioration of quality due to the growth of ice crystals during the cryopreservation of the dough, referred to as damages caused by freezing which results in the volume reduction when baking, can be inhibited. The water-soluble soybean polysaccharide and the ascorbic acid are both known previously as improvers for dough making, but even if either of them is used for Danishes alone, the two effects including the volume increase and the texture improvement as described above cannot be obtained; whereas by using them in combination, the effect of the present invention can be achieved. In terms of the water-soluble soybean polysaccharide and the ascorbic acid, it is known that they have opposite effects of "weakening (softening)" and "strengthening (tightening)" the gluten, respectively. By using them daringly in combination, the effect of quality improvement such as the volume increase, and the improvement of the crisp texture, as described above, can be significantly manifested.

### DESCRIPTION OF THE SPECIFIC EMBODIMENTS

### EXAMPLES

Examples are shown in the followings, which will further illustrate the present invention in details.

○ Study 1: The effect of using a water-soluble soybean polysaccharide and an ascorbic acid in combination (Examples 1∼7, Comparative Examples 1∼3). Croissants were prepared from frozen dough after proofing, according to the formula shown in Table 1. That is, to 90 parts of high-strength flour, 10 parts of low-strength flour, 8 parts of granulated sugar, 10 parts of eggs, 6 parts of yeasts, 5 parts of oleomargarine for kneading (PARIOR ACE , Fuji Oil Co., Ltd.) and 1.8 parts of salt, 0.02 parts of L-ascorbic acid and 0.05∼5 parts of a water-soluble soybean polysaccharide (SOYAFIBE-S, Fuji Oil Co., Ltd.) were added, and finally 45 parts of water was added. The resulting mixture was mixed at a low speed for 5 minutes, followed by at an intermediate speed for 6 minutes, and then kneaded at 18°C. After being cryopreserved at -20°C for 90 minutes, roll-in fats (ARTPIA GS ( 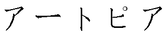 GS), Fuji Oil Co., Ltd.) were incorporated into the dough. First, after being tri-folded twice, the dough was taking a bench time at -6°C for 45 minutes. It was again folded into three layers, and after taking a retarding time at -6°C for 60 minutes, croissants with a dough thickness of 5 mm and 180 mm × 120 mm were finally shaped. After being shaped, they were proofed under a condition of 35°C and 80% humidity, and then frozen quickly with a quick freezer (SHOCK FREELER), to prepare the doughs. After being cryopreserved at -20°C overnight, they were thawed under a condition of 21°C and 75% humidity for 30 minutes, and baked in an oven (upside 220°C, downside 200°C) for 14 minutes. After being cooled at room temperature for 30 minutes, the volume determination was carried out on 3D-Laser-Scanner (ASTEX Company) and the sensory evaluation was performed by 5 participants.

(Table 1) The effect of using a water-soluble soybean polysaccharide and an L-ascorbic acid in combination

**(Table 1) The effect of using a water-soluble soybean polysaccharide and an L-ascorbic acid in combination**

| (Weight% relative to wheat flour) | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| bread flour | 90 | ← | ← | ← | ← | ← | ← | ← | ← | ← |
| cake flour | 10 | ← | ← | ← | ← | ← | ← | ← | ← | ← |
| Granulated | 8 | ← | ← | ← | ← | ← | ← | ← | ← | ← |
| sugar | | | | | | | | | | |
| Salt | 1.8 | ← | ← | ← | ← | ← | ← | ← | ← | ← |
| margarine | 5 | ← | ← | ← | ← | ← | ← | ← | ← | ← |
| Yeasts | 6 | ← | ← | ← | ← | ← | ← | ← | ← | ← |
| Eggs | 10 | ← | ← | ← | ← | ← | ← | ← | ← | ← |
| Water | 44 | ← | ← | 45 | ← | 46 | 49 | 44 | ← | 45 |
| Water-soluble soybean polysaccharide | 0.05 | 0.1 | 0.5 | 1.0 | 1.5 | 2.0 | 5.0 | - | - | 1.5 |
| L-ascorbic acid (ppm relative to wheat flour) | 200 | ← | ← | ← | ← | ← | ← | - | 200 | - |
| Specific volume (ml/g) | 4.66 | 4.75 | 4.95 | 4.99 | 5.3 | 5.34 | 5.41 | 3.95 | 4.45 | 4.35 |
| Texture | Δ∼○ | ○ | ⊚ | ⊚ | ⊚ | ⊚ | ⊚ | × | × | ⊚ |

Results are shown in Table 1. As shown in Examples 1 to 7, compared to with the water-soluble soybean polysaccharide and the ascorbic acid alone, respectively, by using them in combination, the specific volume is significantly increased, and a flaky and smooth texture can both be obtained simultaneously. It should be stated that the texture evaluation was performed as follows: ⊚ with excellent flakiness, excellent crispness, and excellent mouth-soluble feelings; ○ with good flakiness and crispness, and good mouth-soluble feelings; Δ with slightly good crispness; × with poor crispness.

○ Study 2: Studies on the concentration of the ascorbic acid (Examples 8∼10, Comparative Example 4). Next, according to the formula in Table 2, croissants were obtained from frozen dough by baking with the same process as before. It should be stated that, the texture evaluation was performed in the same way as that in Study 1.

(Table 2) Studies on the concentration of the ascorbic acid

**(Table 2) Studies on the concentration of the ascorbic acid**

| (Weight % relative to wheat flour) | Example 8 | Example 9 | Example 10 | Comparative Example 4 |
|---|---|---|---|---|
| bread flour | 90 | ← | ← | ← |
| cake flour | 10 | ← | ← | ← |
| Granulated sugar | 8 | ← | ← | ← |
| Salt | 1.8 | ← | ← | ← |
| margarine | 5 | ← | ← | ← |
| Yeasts | 6 | ← | ← | ← |
| Eggs | 10 | ← | ← | ← |
| Water | 45 | ← | ← | ← |
| Water-soluble soybean polysaccharide | 1 | ← | ← | ← |
| L-ascorbic acid (ppm relative to wheat flour) | 0.1 | 1 | 10 | - |
| Specific volume (ml/g) | 4.17 | 4.25 | 4.64 | 4.14 |
| Texture | ○∼⊚ | ⊚ | ⊚ | ○∼⊚ |

Results are shown in Table 2. As shown in Examples 8 to 10, by using in combination with the ascorbic acid above 0.1 ppm, compared with the addition of the water-soluble soybean polysaccharide alone, the specific volume of the product is increased, and it also can be obtained excellent crispness and excellent mouth feel.

○ Study 3: Freezing-thawing cycle test (Example 11, Comparative Example 5). According to the formula of Table 3, being similar with the previous examples, frozen dough of croissants after proofing was prepared for use in the freezing-thawing cycle test. That is, 12 frozen doughs of croissants after proofing were divided randomly into three groups, with 4 doughs for each group. The quick freezing and thawing cycles(-40°C for 60 minutes and 21°C, 75% humidity, for 30 minutes) were forced to be carried out repeatedly for 1, 3, 5 times, followed by being baked in an oven.

(Table 3) Freezing-thawing cycle test

**(Table 3) Freezing-thawing cycle test**

| (Weight % relative to wheat flour) | Example 11 | Comparative Example 5 |
|---|---|---|
| bread flour | 90 | ← |
| cake flour | 10 | ← |
| Granulated sugar | 8 | ← |
| Salt | 1.8 | ← |
| margarine | 5 | ← |
| Yeasts | 6 | ← |
| Eggs | 10 | ← |
| Water | 45 | ← |
| Water-soluble soybean polysaccharide | 1.5 | - |
| L-ascorbic acid (ppm relative to wheat flour) | 2 | - |
| Specific volume (ml/g) | | |
| 1 Cycle | 4.51 | 4.15 |
| 3 Cycles | 4.26 | 3.88 |
| 5 Cycles | 4.24 | 3.77 |

Results of the cycle test are shown in Table 3. For Comparative Example 5, probably due to repeatedly freezing and thawing which made the bread dough damaged, it showed a decreased specific volume; however, for Example 11 using the water-soluble soybean polysaccharide and the ascorbic acid in combination, the decreased specific volume in an extent similar with Comparative Example 5 cannot be observed, even if duing the fifth cycle, a value of the specific volume higher than that of Comparative Example 5 was also kept.

○Study 4: Preparation from an unfrozen dough. Danishes were made by artisan method (non-freezing dough) according to the formula shown in Table 4. That is, to 90 parts of high-strength flour, 10 parts of low-strength flour, 15 parts of granulated sugar, 10 parts of eggs, 4 parts of yeasts, 5 parts of oleomargarine for kneading (Pariolace, Fuji Oil Co., Ltd.) and 1.2 parts of salt, 0.005 parts of L-ascorbic acid and 0.1∼3 parts of water-soluble soybean polysaccharide (SOYAFIBE-S, Fuji Oil Co., Ltd.) were added, and finally 50 parts of water was added. The resulting mixture was mixed at a low speed for 5 minutes, followed by at an intermediate speed for 5 minutes, and then kneaded at 26°C. After a floor time for 60 minutes at room temperature, a primary fermentation was performed under a condition of 29°C and 70% humidity. After being cryopreserved at -6°C for 120 minutes, roll-in fats (Atopia GS, Fuji Oil Co., Ltd.) were incorporated into the dough. It was tri-folded twice, cryopreserved again at -6°C for 60 minutes followed by being tri-folded once, and finally extended to a dough with a thickness of 5 mm and 100 mm × 100 mm, thus being shaped into Danishes. After being shaped, they were proofed under a condition of 32°C and 80% humidity, and baked in an oven (upper 210°C, lower 200°C) for 16 minutes. After being cooled at room temperature for 30 minutes, the volume determination and functional evaluation were carried out on a 3D-Laser-Scanner (ASTEX Company). The texture evaluation was performed in accordance with Study 1, and the extensibility evaluation of the dough was performed as follows. (The extensibility evaluation of the dough) 5: thin and with a good extension, little shrinkage after extension; 4: with a good extension, but slight shrinkage after extension; 3: evaluation standard; 2: with limited extension; 1: hard and with poor extension.

(Table 4) Preparation from unfrozen dough

**(Table 4) Preparation from unfrozen dough**

| | Example 12 | Example 13 | Example 14 | Example 15 | Comparative Example 6 | Comparative Example 7 |
|---|---|---|---|---|---|---|
| bread flour | 90 | ← | ← | ← | ← | ← |
| cake flour | 10 | ← | ← | ← | ← | ← |
| Granulated sugar | 15 | ← | ← | ← | ← | ← |
| Salt | 1.2 | ← | ← | ← | ← | ← |
| margarine | 5 | ← | ← | ← | ← | ← |
| Yeasts | 4 | ← | ← | ← | ← | ← |
| Eggs | 10 | ← | ← | ← | ← | ← |
| Water | 50 | ← | 51 | 54 | 50 | ← |
| Water-soluble soybean polysaccharide | 0.1 | 0.5 | 1.0 | 3.0 | - | - |
| L-ascorbic acid (ppm relative to wheat flour) | 50 | 50 | 50 | 50 | - | 50 |
| Extensibility of dough | 5 | 5 | 5 | 5 | 3 | 2 |
| Specific volume (ml/g) | 5.41 | 5.58 | 5.72 | 5.77 | 4.90 | 5.38 |
| | ○ | ⊚ | ⊚ | ⊚ | Δ | × |

Results are shown in Table 4. As shown in Examples 12∼15, the Danish dough obtained by using the water-soluble soybean polysaccharide and the ascorbic acid in combination has a very excellent extensibility, and even if in the milling method, it may be confirmed that the specific volume is increased, and a crumbly and crispy texture can be obtained simultaneously.

## Claims

1. A method for producing Danish dough, **characterized in that** a water-soluble soybean polysaccharide and an ascorbic acid are added.

2. The method for producing Danish dough according to claim 1, wherein the addition amount of the water-soluble soybean polysaccharide is between 0.05 and 5 weight % relative to wheat flour, and the addition amount of the ascorbic acid is between 0.1 and 200 ppm relative to wheat flour.

3. The method for producing Danish dough according to claim 1, wherein the addition amount of the water-soluble soybean polysaccharide is between 0.1 and 3 weight % relative to wheat flour, and the addition amount of the ascorbic acid is between 0.1 and 200 ppm relative to wheat flour.

4. The method for producing Danish dough according to claim 1, wherein the addition amount of the water-soluble soybean polysaccharide is between 0.05 and 5 weight % relative to wheat flour, and the addition amount of the ascorbic acid is between 1 and 200 ppm relative to wheat flour.

5. The method for producing Danish dough according to claim 1, wherein the addition amount of the water-soluble soybean polysaccharide is between 0.1 and 3 weight % relative to wheat flour, and the addition amount of the ascorbic acid is between 1 and 200 ppm relative to wheat flour.

6. A method for producing frozen Danish dough, comprising freezing the Danish dough produced by the method according to any one of claims 2 to 5.

7. The method for producing frozen Danish dough according to any one of claims 2 to 5, **characterized in that** freezing is carried out after proofing time.

## Patentansprüche

1. Ein Verfahren zur Herstellung von dänischem Teig, **dadurch gekennzeichnet dass** wasserlösliches Sojabohnen-Polysaccharid und Ascorbinsäure beigefügt sind.

2. Das Verfahren zur Herstellung von dänischem Teig, nach Anspruch 1, wobei die Zusatzmenge von wasserlöslichem Sojabohnen-Polysaccharid von einem Gewicht zwischen 0.05 und 5 % im Verhältnis zum Weizenmehl und die Zusatzmenge von Ascorbinsäure zwischen 0.1 und 200 ppm im Verhältnis zum Weizenmehl sind.

3. Das Verfahren zur Herstellung von dänischem Teig, nach Anspruch 1, wobei die Zusatzmenge von wasserlöslichem Sojabohnen-Polysaccharid von einem Gewicht zwischen 0.1 und 3 % im Verhältnis zum Weizenmehl und die Zusatzmenge von Ascorbinsäure zwischen 0.1 und 200 ppm im Verhältnis zum Weizenmehl sind.

4. Das Verfahren zur Herstellung von dänischem Teig, nach Anspruch 1, wobei die Zusatzmenge von wasserlöslichem Sojabohnen-Polysaccharid von einem Gewicht zwischen 0.05 und 5 % im Verhältnis zum Weizenmehl und die Zusatzmenge von Ascorbinsäure zwischen 1 und 200 ppm im Verhältnis zum Weizenmehl sind.

5. Das Verfahren zur Herstellung von dänischem Teig, nach Anspruch 1, wobei die Zusatzmenge von wasserlöslichem Sojabohnen-Polysaccharid von einem Gewicht zwischen 0.1 und 3 % im Verhältnis zum Weizenmehl und die Zusatzmenge von Ascorbinsäure zwischen 1 und 200 ppm im Verhältnis zum Weizenmehl sind.

6. Ein Verfahren zur Herstellung von dänischem Teig, welches aus dem Einfrieren des, durch das Verfahren erzeugten, dänischen Teigs nach einem der Ansprüche 2 bis 5 besteht.

7. Das Verfahren zur Herstellung von dänischem Teig, nach Ansprüchen 2 bis 5, **dadurch gekennzeichnet**, indem das Einfrieren nach der Gärzeit ausgeführt wird.

## Revendications

1. Procédé de production d'un beignet danois, **caractérisé en ce qu'**un polysaccharide de soja hydrosoluble et un acide ascorbique sont ajoutés.

2. Procédé de production d'un beignet danois selon la revendication 1, dans lequel la quantité d'ajout du polysaccharide de soja hydrosoluble est comprise entre 0,05 et 5 % en poids par rapport à la farine de blé, et la quantité d'ajout de l'acide ascorbique est comprise entre 0,1 et 200 ppm par rapport à la farine de blé.

3. Procédé de production d'un beignet danois selon la revendication 1, dans lequel la quantité d'ajout du polysaccharide de soja hydrosoluble est comprise entre 0,1 et 3 % en poids par rapport à la farine de blé, et la quantité d'ajout de l'acide ascorbique est comprise entre 0,1 et 200 ppm par rapport à la farine de blé.

4. Procédé de production d'un beignet danois selon la revendication 1, dans lequel la quantité d'ajout du polysaccharide de soja hydrosoluble est comprise entre 0,05 et 5 % en poids par rapport à la farine de blé, et la quantité d'ajout de l'acide ascorbique est comprise entre 1 et 200 ppm par rapport à la farine de blé.

5. Procédé de production d'un beignet danois selon la revendication 1, dans lequel la quantité d'ajout du polysaccharide de soja hydrosoluble est comprise entre 0,1 et 3 % en poids par rapport à la farine de blé, et la quantité d'ajout de l'acide ascorbique est comprise entre 1 et 200 ppm par rapport à la farine de blé.

6. Procédé de production d'un beignet danois congelé, comprenant la congélation du beignet danois produit par le procédé selon l'une quelconque des revendications 2 à 5.

7. Procédé de production d'un beignet danois congelé selon l'une quelconque des revendications 2 à 5, **caractérisé en ce que** la congélation est effectuée après un temps de fermentation.
